# EUROPÄISCHE PATENTSCHRIFT

(11) **EP 4 014 712 B1**
(45) Veröffentlichungstag und Bekanntmachung des Hinweises auf die Patenterteilung: **18.12.2024**
(21) Anmeldenummer: 21199799.4
(22) Anmeldetag: 29.09.2021
(51) Int. Cl.: A01D 41/127

(54) **VERFAHREN ZUM SAMMELN EINER ERNTEGUT-LABORPROBE IN EINEM MÄHDRESCHER**
METHOD FOR COLLECTING A CROP LABORATORY SAMPLE IN A COMBINE HARVESTER
PROCÉDÉ DE PRÉLÈVEMENT D'UN ÉCHANTILLON DE LABORATOIRE DE RÉCOLTE DANS UNE MOISSONNEUSE-BATTEUSE

(30) Priorität: 17.12.2020 DE 102020134033
(43) Veröffentlichungstag der Anmeldung: 22.06.2022
(73) Patentinhaber: CLAAS Selbstfahrende Erntemaschinen GmbH, 33428 Harsewinkel (DE)
(72) Erfinder: Marbach, Ralf, 33775 Versmold (DE); Witte, Johann, 58730 Fröndenberg (DE); Middelberg, René, 49080 Osnabrück (DE); Fischer, Frédéric, 59759 Arnsberg (DE); Nalbach, Marc, 33102 Paderborn (DE)
(74) Vertreter: CLAAS Gruppe

(56) Entgegenhaltungen:
- EP-A1- 1 825 740
- EP-A1- 2 119 339
- FR-A1- 2 801 380

## Beschreibung

Die Erfindung betrifft ein Verfahren zum Sammeln einer Laborprobe aus einem Los Erntegut mittels einer landwirtschaftlichen Erntemaschine gemäß dem Oberbegriff von Anspruch 1 sowie eine landwirtschaftliche Erntemaschine gemäß dem Anspruch 14.

Die chemische Analyse von Erntegut ist in der Landwirtschaft schon länger relevant.

Bei diesem Erntegut kann es sich zum Beispiel um Mais und Gras handeln, das von einem Feldhäcksler zur Silierung geerntet wird. Weiterhin kann es sich um Getreidekörner, Hülsenfrüchte und Ölfrüchtekörner handeln, die von einem Mähdrescher geerntet werden. Chemisch analysiert werden dabei im Wesentlichen Inhaltsstoffe, primär die Feuchte, die typisch in Prozent der Gesamtmasse angegeben wird. Relevant sind jedoch auch andere Inhaltsstoffe, wie Proteine und Zucker, die typisch in Prozent der Trockenmasse angegeben werden und abstraktere Merkmale wie beispielsweise die Verdaulichkeit für Nutztiere.

Vorliegend steht die zeitlich entkoppelte, sogenannte "at-line" Analyse im Vordergrund.

Bei dieser handelt es sich um Messungen, die in relativ großen Zeitabständen durchgeführt werden, um Mittelwertkonzentrationen eines Loses Erntegut, also einer gro-ßen, definierten Menge Erntegut, zu bestimmen. Der Zeitabstand zwischen verschiedenen Messungen ist dabei prozessabhängig und kann von wenigen Sekunden bis hin zu mehreren Tagen reichen. Die Grundlage für die at-line Analyse ist das Sammeln einer geeigneten Laborprobe, die die chemischen Eigenschaften der gesamten in Frage stehenden Erntegutmenge gut widerspiegelt.

Von on-line Messungen unterscheidet sich die at-line Analyse durch die zeitliche Entkopplung. Insbesondere messen on-line Sensoren typischerweise mit äquidistanten Zeitabständen direkt am laufenden Gutstrom.

Im Fokus steht hier die Entnahme einer Laborprobe aus einem Los Erntegut mittels einer landwirtschaftlichen Erntemaschine. Diese Laborprobe soll vorgegebene Anforderungen an die Repräsentativität erfüllen und zeitlich entkoppelt gemessen werden können. Sie wird also aus einem Erntegutstrom einer landwirtschaftlichen Erntemaschine entnommen und von diesem entkoppelt. Eine Zurückführung in den Erntegutstrom nach der Analyse steht dem allerdings nicht entgegen. Es sind grundsätzlich Konzepte bekannt, um einen Teil des Erntegutstroms abzuzweigen und als Laborprobe zu benutzen. Problematisch ist jedoch, dass damit entweder sehr große Mengen gesammelt werden oder eine schlechtere Repräsentativität vorhanden ist. Bei einer großen Probe kann die Repräsentativität noch vorhanden sein, es ist dann jedoch notwendig, diese Probe anschließend noch weiter aufzuarbeiten. Somit verbleibt viel Arbeit bei einem Benutzer.

Derartige Verfahren sind beispielsweise aus der EP 2 119 339 A1, der EP 1 825 740 A1 oder der FR 2 801 380 A1 bekannt.

Der Erfindung liegt das Problem zugrunde, ein Verfahren zum Sammeln einer Laborprobe anzugeben, das dem Benutzer Arbeit abnimmt und gleichzeitig vorgegebene Ansprüche an die Repräsentativität der Laborprobe erfüllt.

Das obige Problem wird bei einem Verfahren gemäß Anspruch 1 gelöst.

Vorliegend wird ein Verfahren zum Sammeln einer Laborprobe bei einer landwirtschaftlichen Erntemaschinen betrachtet, die mindestens ein Arbeitsaggregat zum Aufnehmen eines abgeernteten Feldbestandes als Erntegut und/oder zur Verarbeitung des Ernteguts aufweist, wobei das Erntegut im Betrieb der landwirtschaftlichen Erntemaschine in einem Erntegutstrom entlang eines Ernteguttransportweges durch die landwirtschaftlichen Erntemaschine transportiert wird.

Wesentlich ist die grundsätzliche Überlegung, einen zweistufigen Probeentnahmeprozess vorzusehen und eine Zerkleinerungsvorrichtung zwischen eine Grob-Teilungsvorrichtung und eine Fein-Teilungsvorrichtung zu schalten.

Im Einzelnen wird vorgeschlagen, dass die landwirtschaftliche Erntemaschine eine automatische Probenentnahmevorrichtung aufweist, dass die Probenentnahmevorrichtung eine am Ernteguttransportweg angeordnete Grob-Teilungsvorrichtung und eine Zerkleinerungsvorrichtung und eine Fein-Teilungsvorrichtung aufweist, dass die Grob-Teilungsvorrichtung aus dem Erntegutstrom des Loses eine Rohprobe entnimmt, dass die Zerkleinerungsvorrichtung die Rohprobe zerkleinert und dass die Fein-Teilungsvorrichtung aus der zerkleinerten Rohprobe die Laborprobe zur zeitlich entkoppelten Analyse entnimmt.

Durch das Vorsehen der Zerkleinerungsvorrichtung in der landwirtschaftlichen Erntemaschine wird insbesondere ermöglicht, einem Benutzer eine analysefähige Laborprobe vollständig vorbereitet auszugeben oder die Laboranalyse direkt auf der landwirtschaftlichen Erntemaschine durchzuführen.

Der zweistufige Entnahmeprozess ermöglicht es, mittels der Grob-Teilungsvorrichtung einen noch repräsentativen Teil des Erntegutstroms zu entnehmen, wobei Rücksicht darauf genommen werden kann, dass dieser Erntegutstrom große Mengen an Erntegut in kurzer Zeit fördert und daher nicht beliebig handhabbar ist. Durch das Zerkleinern der so gewonnenen Rohprobe wird dann in der bevorzugen Ausführungsform eine weitere Teilung und somit Massereduktion mittels der Fein-Teilungsvorrichtung ermöglicht. In einigen Fällen kann die Fein-Teilungsvorrichtung jedoch auch die vollständige zerkleinerte Rohprobe als Laborprobe entnehmen. Beispielsweise kann durch Kombination der Zerkleinerungsvorrichtung und der Fein-Teilungsvorrichtung eine Durchmischung erfolgen, wobei anschließend die Laborprobe als Ganzes analysiert wird. Auf einer landwirtschaftlichen Erntemaschine durchführbare Messverfahren können insbesondere Verfahren der NIR Reflektionsspektroskopie sein, die sowieso nur die Oberfläche der Laborprobe analysieren, sodass eine weitere Massereduktion unterbleiben kann. Dennoch kommt es dabei vorliegend auf die zeitliche Entkopplung an.

Bei einer bevorzugten Ausgestaltung gemäß Anspruch 2 entnimmt die Grob-Teilungsvorrichtung aus dem Erntegutstrom einen Rohprobenstrom, den die Zerkleinerungsvorrichtung zerkleinert. Vorzugsweise entnimmt die Fein-Teilungsvorrichtung aus dem zerkleinerten Rohprobenstrom einen Laborprobenstrom, aus dem wiederum die Laborprobe entnommen werden kann. Das Los Erntegut befindet sich üblicherweise nicht gleichzeitig in der landwirtschaftlichen Erntemaschine, sondern entspricht einem grö-ßeren Abschnitt eines Feldes. Das Entnehmen eines Rohprobenstromes ermöglicht es, auf einfache Art und Weise in der Laborprobe vorzugsweise das gesamte Los Erntegut abzubilden.

Eine besonders bevorzugte Ausgestaltung gemäß Anspruch 3 betrifft die Möglichkeit, die Rohprobe und die Laborprobe kontinuierlich zu entnehmen, womit ebenfalls eine vollständige Abbildung des Loses ermöglicht werden kann. Weiter interessant ist dabei, dass eine zeitliche Verzögerung zwischen Aufnahme des Ernteguts und Entnahme der Laborprobe konstant und insbesondere bekannt sein kann. Gerade, wenn mehrere Laborproben entnommen werden, kann dies besonders vorteilhaft sein, um die Laborproben entsprechend zuzuordnen. Weiterhin erhöhen die insgesamt zur kontinuierlichen und gleichmäßigen Entnahme beitragenden Ausgestaltungen der Ansprüche 2 und 3 die Repräsentativität der Laborprobe.

Die Ansprüche 4 und 5 betreffen die Möglichkeit, die Rohprobe und die Laborprobe jeweils durchgängig abzuzweigen oder in diskreten Abschnitten zu entnehmen. Beide Möglichkeiten können dabei kontinuierlich umgesetzt werden. Je nach Erntegut, Messverfahren und weiterer Umsetzung des vorschlagsgemäßen Verfahrens kann die Kombination frei gewählt werden.

Erfindungsgemäß ist die Fein-Teilungsvorrichtung dazu eingerichtet, den Gewichtsanteil und/oder Volumenanteil der Laborprobe an der Rohprobe einzustellen. In einer bevorzugten Ausführungsform ist die Grob-Teilungsvorrichtung dazu eingerichtet, den Gewichtsanteil und/oder Volumenanteil der Rohprobe an dem Los einzustellen.

Es wird damit ermöglicht, eine repräsentative Laborprobe in der Größenordnung einiger Gramm aus einem Los Erntegut in der groben Größenordnung von hundert Tonnen zu entnehmen.

Anspruch 8 betrifft die bevorzugte Zerkleinerung der Partikel der Rohprobe mittels der Zerkleinerungsvorrichtung, die entsprechend auf die Grob-Teilungsvorrichtung und die Fein-Teilungsvorrichtung abgestimmt ist.

Die Ansprüche 9 bis 11 betreffen bevorzugte mechanische Ausgestaltungen der Grob-Teilungsvorrichtung, der Zerkleinerungsvorrichtung und der Fein-Teilungsvorrichtung. Die Grob-Teilungsvorrichtung ist dabei auf die Handhabung großer und schneller Erntegutströme ausgelegt. Die Zerkleinerungsvorrichtung ist vorzugsweise auf ein gleichmäßiges Zerkleinern und/oder ein gleichmäßiges Durchmischen ausgerichtet. Die Fein-Teilungsvorrichtung kann eine bewegliche Klappe aufweisen, die ansteuerbar ist und die somit ein Abschalten und/oder eine Einstellung der Fein-Teilungsvorrichtung ermöglicht. Insbesondere kann so eine Abstimmung auf das jeweilige Erntegut erfolgen.

Bei einer Ausgestaltung gemäß Anspruch 12 weist die Probeentnahmevorrichtung eine Sammelvorrichtung für die Laborprobe auf. Insbesondere wird damit ermöglicht, die Laborprobe fertig verpackt an einen Benutzer auszugeben. Entsprechend betrifft Anspruch 13 die Möglichkeit, die Laborprobe außerhalb der landwirtschaftlichen Erntemaschine zu analysieren.

Erfindungsgemäß wird auch eine entsprechende landwirtschaftliche Erntemaschine mit den Merkmalen des Anspruchs 14 zur Lösung der oben genannten Problemstellung vorgeschlagen.

Im Folgenden wird die Erfindung anhand einer lediglich Ausführungsbeispiele darstellenden Zeichnung näher erläutert. In der Zeichnung zeigt
- Fig. 1: eine vorschlagsgemäße landwirtschaftliche Erntemaschine zur Verwendung in dem vorschlagsgemäßen Verfahren,
- Fig. 2: schematisch die Teilung eines Loses Erntegut bis hin zur Laborprobe und
- Fig. 3: zwei mögliche Ausgestaltungen der Probenentnahmevorrichtung.

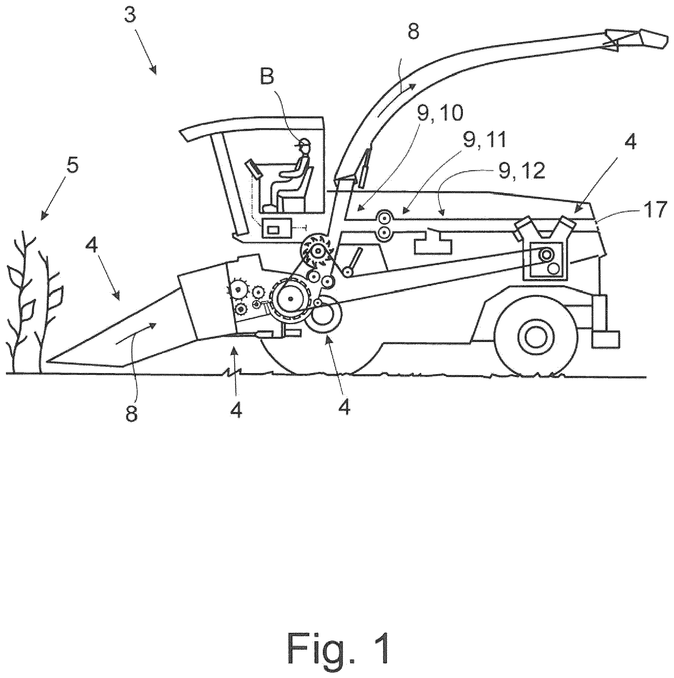

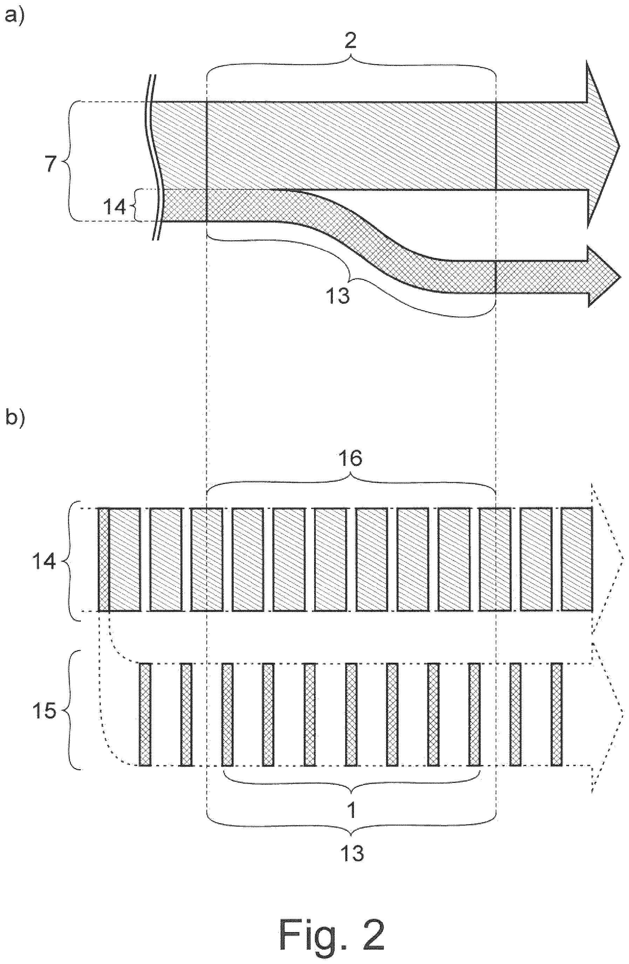

Das in Rede stehende Verfahren zum Sammeln einer Laborprobe 1 aus einem Los Erntegut 2 ist schematisch in Fig. 2 abgebildet. Das Verfahren wird mittels einer landwirtschaftlichen Erntemaschine 3 mit mindestens einem Arbeitsaggregat 4 zum Aufnehmen eines abgeernteten Feldbestandes 5 als Erntegut 6 und/oder zur Verarbeitung des Ernteguts 6 durchgeführt. Das Verfahren wird beispielhaft an dem in Fig. 1 dargestellten Feldhäcksler als landwirtschaftliche Erntemaschine 3 erläutert. Dies ist jedoch nicht beschränkend zu verstehen. Als weitere bevorzugte landwirtschaftliche Erntemaschine 3 kommen für die Durchführung des Verfahrens Mähdrescher, Ladewagen und Ballenpressen sowie Mähwerke, Wender und Schwader in Frage.

Das Erntegut 6 besteht vorliegend vorzugsweise aus Mais, Gras, Getreidekörnern, Hülsenfrüchten, Ölfrüchtekörnern, Heu oder Stroh. Auch diese Aufzählung ist jedoch nicht beschränkend zu verstehen. Weiter bevorzugt ist dabei die Kombination eines Feldhäckslers als landwirtschaftliche Erntemaschine 3 mit Mais oder Gras als Erntegut 6 oder die Kombination eines Mähdreschers als landwirtschaftliche Erntemaschine 3 mit Getreidekörnern oder Hülsenfrüchten oder Ölfrüchtekörnern als Erntegut 6 oder einem Ladewagen als landwirtschaftliche Erntemaschine 3 mit Gras oder Stroh als Erntegut 6 oder einer Ballenpresse als landwirtschaftliche Erntemaschine 3 mit Stroh als Erntegut 6.

Das Erntegut 6 wird im Betrieb der landwirtschaftlichen Erntemaschine 3 in einem Erntegutstrom 7 entlang eines Ernteguttransportweges 8 durch die landwirtschaftliche Erntemaschine 3 transportiert. Das Los Erntegut 2 entspricht einem Zeitabschnitt des Erntegutstroms 7. Dabei ist es hier und vorzugsweise so, dass ein Los Erntegut 2 deutlich mehr Erntegut 6 umfasst, als sich zu einem beliebigen Zeitpunkt gleichzeitig in der landwirtschaftlichen Erntemaschine 3 befindet. Sofern die landwirtschaftliche Erntemaschine 3 einen Sammelbehälter für das Erntegut 6 umfasst, wie beispielsweise bei einem Ladewagen der Fall, kann das Los Erntegut 2 auch über die Füllung dieses Sammelbehälters definiert sein. Daraus ergibt sich, dass bei einer normalen Feldbearbeitung üblicherweise mehrere Lose Erntegut 2 anfallen. Entsprechend kann das vorschlagsgemäße Verfahren während einer Feldbearbeitung mehrfach am Stück oder zeitlich beabstandet durchgeführt werden. Genauso kann aber auch vorgesehen sein, pro Feldbearbeitung nur eine Laborprobe 1 zu nehmen. Beispielhafte Größen für die Laborprobe 1 und das Los Erntegut 2 werden im Folgenden noch genannt.

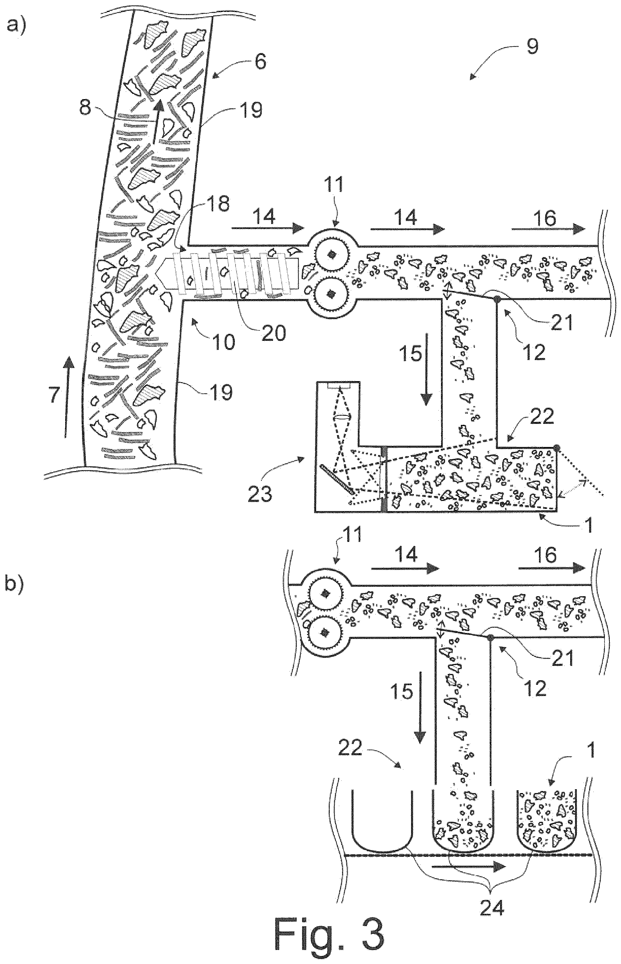

Wesentlich ist nun, dass die landwirtschaftliche Erntemaschine 3 eine automatische Probenentnahmevorrichtung 9 aufweist. Diese ist in Fig. 3 detaillierter dargestellt. Die Probenentnahmevorrichtung 9 weist eine am Ernteguttransportweg 8 angeordnete Grob-Teilungsvorrichtung 10, eine Zerkleinerungsvorrichtung 11 und eine Fein-Teilungsvorrichtung 12 auf. Auch diese sind im Detail in Fig. 3 dargestellt.

Grundsätzlich sind in manchen landwirtschaftlichen Erntemaschinen 3 sogenannte "Bypass" Kanäle vorgesehen, durch die nur ein kleiner Teil des Ernteguts 6 transportiert wird. Vorliegend ist die Grob-Teilungsvorrichtung 10 jedoch vorzugsweise an einem Haupt-Ernteguttransportweg angeordnet, durch den der größte Teil des oder das vollständige Erntegut 6 transportiert wird. Tatsächlich lässt sich auch eine bereits vorgesehen Teilung für einen Bypass grundsätzlich als Grob-Teilungsvorrichtung 10 verwenden.

Wesentlich ist dabei auch, dass die Grob-Teilungsvorrichtung 10 aus dem Erntegutstrom 7 des Loses 2 eine Rohprobe 13 entnimmt. Die Grob-Teilungsvorrichtung 10 kann dabei, wie noch erläutert werden wird, grundsätzlich aktiv oder passiv ausgestaltet sein. Im Ausführungsbeispiel ist die Grob-Teilungsvorrichtung 10 aktiv ausgestaltet. Fig. 2a) verdeutlicht schematisch, wie die Grob-Teilungsvorrichtung 10 aus dem Los Erntegut 2 einen Teil als Rohprobe 13 entnimmt. Dabei handelt es sich um einen kleinen Bruchteil des Loses Erntegut 2, wobei exemplarische Werte im Folgenden noch genannt werden.

Wesentlich ist weiterhin, dass die Zerkleinerungsvorrichtung 11 die Rohprobe 13 zerkleinert. Die Zerkleinerungsvorrichtung 11 kann jegliche Vorrichtung sein, die in der Lage ist, eine Partikelgröße der Rohprobe 13 zu reduzieren. Bevorzugt ist es dabei so, dass die Zerkleinerungsvorrichtung 11 die Rohprobe 13 zu einem Pulver zerkleinert. Auch hier werden bevorzugte Partikelgrößen später noch genannt.

Wie in Fig. 2b) verdeutlicht, ist weiterhin wesentlich, dass die Fein-Teilungsvorrichtung 12 aus der zerkleinerten Rohprobe 13 die Laborprobe 1 zur zeitlich entkoppelten Analyse entnimmt. Wie später am Ausführungsbeispiel der Fein-Teilungsvorrichtung 12 noch verdeutlicht wird, kann die Fein-Teilungsvorrichtung 12 die vollständige zerkleinerte Rohprobe 13 als Laborprobe 1 entnehmen. In einer bevorzugten Ausführungsform ist die Laborprobe 1 jedoch nur ein kleiner Teil der zerkleinerten Rohprobe 13. Es ergibt sich somit, dass insgesamt die Laborprobe 1 nur einem Bruchteil des Loses Erntegut 2 entspricht.

Das vorschlagsgemäße Verfahren kann als solches unabhängig von der weiteren Analyse der Laborprobe 1 eingesetzt werden. Es ist daher so, dass der Begriff "Labor" sehr weit zu verstehen ist. Es geht dabei grundsätzlich darum, dass keine on-line Analyse des Ernteguts 6 vorgenommen wird. Es ist jedoch durchaus möglich, die Laborprobe 1 an Bord der landwirtschaftlichen Erntemaschine 3 zu analysieren. Dabei ist die zeitliche Entkopplung der Laborprobe 1 von dem Erntegutstrom 7 wesentlich, wodurch die Laborprobe 1 auch ein Los Erntegut 2 abbilden kann, jedoch nicht muss, das deutlich größer ist als die Menge an Erntegut 6, die zu einem beliebigen Zeitpunkt von der landwirtschaftlichen Erntemaschine 3 verarbeitet wird. Auch ist das Verfahren, anders als ein on-line Verfahren, grundsätzlich geeignet, die Laborprobe 1 zu einem beliebigen Zeitpunkt zu analysieren. Eine tatsächliche Möglichkeit, dies zu tun, muss auf der landwirtschaftlichen Erntemaschine 3 nicht vorgesehen sein. Hier und vorzugsweise erfolgt das Sammeln der vollständigen Laborprobe 1 vor einer Analyse der Laborprobe 1.

Wie aus Fig. 1 ersichtlich, ist die Grob-Teilungsvorrichtung hier und vorzugsweise entlang des Ernteguttransportweges 8 angeordnet. Die Fein-Teilungsvorrichtung 12 und vorzugsweise die Zerkleinerungsvorrichtung 11 können jedoch abseits des Ernteguttransportweges 8 angeordnet sein. In einer bevorzugten Ausführungsform sind die Grob-Teilungsvorrichtung 10 und die Zerkleinerungsvorrichtung 11 und die Fein-Teilungsvorrichtung 12 voneinander beabstandet und funktional hintereinander angeordnet.

Wie bereits erwähnt, kann das vorschlagsgemäße Verfahren während einer Feldbearbeitung vorzugsweise durchgehend Laborproben 1 produzieren. Im Ausführungsbeispiel ist zusätzlich eine noch zu erläuternde Ein- und Ausschaltbarkeit der Probenentnahmevorrichtung 9 vorgesehen. Im Hinblick darauf und dargestellt anhand der Fig. 2 ist es hier und vorzugsweise so, dass die Grob-Teilungsvorrichtung 10 aus dem Erntegutstrom 7 einen Rohprobenstrom 14 entnimmt und dass die Zerkleinerungsvorrichtung 11 den Rohprobenstrom 14 zerkleinert. Die Rohprobe 13 wird also vorzugsweise nicht am Stück in einem Vorgang als Ganzes entnommen. In Fig. 2a) ist schematisch dargestellt, wie der Rohprobenstrom 14 aus dem Erntegutstrom 7 entnommen wird.

Vorzugsweise entnimmt die Fein-Teilungsvorrichtung 12 aus dem zerkleinerten Rohprobenstrom 14 einen Laborprobenstrom 15, wie schematisch in Fig. 2b) dargestellt. Sowohl der Rohprobenstrom 14 als auch der Laborprobenstrom 15 sind auch in Fig. 3 dargestellt, wobei die jeweils neben dem entsprechenden Strom angeordneten Pfeile mit den entsprechenden Bezugszeichen versehen sind. Wieder im Hinblick auf Fig. 2b) ist es hier und vorzugsweise so, dass die Laborprobe 1 ein Abschnitt des Laborprobenstroms 15 ist.

Es ist hier so, dass alle Ausführungen zu der Rohprobe 13 und der Laborprobe 1 bevorzugt auch jeweils für den Rohprobenstrom 14 und den Laborprobenstrom 15 gelten. Es kann also vorgesehen sein, dass mehrere Laborproben 1 durch Wiederholung des vorschlagsgemäßen Verfahrens und vorzugsweise auf die gleiche Art und Weise entnommen werden. Dennoch steht vorliegend erstmal die Entnahme einer einzelnen Laborprobe 1 im Vordergrund.

Es ist hier besonders bevorzugt so, dass die Grob-Teilungsvorrichtung 10 die Rohprobe 13 kontinuierlich aus dem Erntegutstrom 7 entnimmt und die Fein-Teilungsvorrichtung 11 die Laborprobe 1 kontinuierlich aus der zerkleinerten Rohprobe 13 entnimmt, sodass die Laborprobe 1 ein zusammenhängendes Los 2, insbesondere vollständig, abbildet. Die Laborprobe 1 entsteht also beispielsweise nicht nur aus den mittleren 10% des Loses 2. Damit einher geht die Möglichkeit, dass eine zeitliche Verzögerung zwischen Aufnahme des Ernteguts 6 und Entnahme der Laborprobe 1 im Wesentlichen konstant ist. Somit wird eine Zuordnung der Laborprobe 1 zu einem Abschnitt des Feldbestandes 5 ermöglicht.

Das vollständige Abbilden des Loses Erntegut 2 durch die Laborprobe 1 erfordert ein gewisses Maß an Repräsentativität, wobei die durch die partikuläre Zusammensetzung des Ernteguts 6 entstehende Varianz der chemischen Zusammensetzung der Laborprobe 1 vorzugsweise in der Größenordnung einer Wiederholvarianz einer Messapparatur zur Analyse der Laborprobe 1 oder darunter liegt. Es wird daher durch das vorschlagsgemäße Verfahren ermöglicht, Laborproben 1 an Bord der landwirtschaftlichen Erntemaschine 3 zu entnehmen, die einen sehr kleinen oder möglicherweise sogar gar nicht relevanten Fehler in die Analyse einbringen, obwohl die Laborprobe 1 nur einen geringen Bruchteil des Loses Erntegut 2 ausmacht.

Der Begriff "kontinuierlich" bezieht sich, wie nun erläutert wird, nicht zwingend auf eine durchgängige, zumindest aber auf eine regelmäßige Entnahme.

Es kann vorgesehen sein, dass die Grob-Teilungsvorrichtung 10 die Rohprobe 13 in diskreten, insbesondere äquidistanten, Abschnitten aus dem Erntegutstrom 7 entnimmt. Dafür kann diese beispielsweise regelmäßig ein- und ausgeschaltet werden. Alternativ kann vorgesehen sein, dass die Grob-Teilungsvorrichtung 10 die Rohprobe 13 durchgängig aus dem Erntegutstrom 7 abzweigt. Dies entspricht der in Fig. 2a) dargestellten Variante. Je nach Erntegut 6 kann mit einem Abzweigen eine etwas geringere Repräsentativität einhergehen, die jedoch durch eine mechanisch möglicherweise deutlich einfachere Ausgestaltung der Grob-Teilungsvorrichtung 10 kompensiert wird. Ein Abzweigen der Rohprobe 13 aus dem Erntegutstrom 7 kann außerdem eine besonders einfache passive Ausgestaltung der Grob-Teilungsvorrichtung 10 ermöglichen. Beispielsweise könnte die Grob-Teilungsvorrichtung 10 lediglich ein Gitter am Rand des Ernteguttransportweges 8 umfassen.

Die in Fig. 3 dargestellte Variante umfasst allerdings eine aktive Grob-Teilungsvorrichtung 10, die noch erläutert wird. Wie dort ebenfalls erkennbar ist, ist es hier und vorzugsweise so, dass die Zerkleinerungsvorrichtung 11 die Rohprobe 13 vollständig zerkleinert. Eine Teilung der Rohprobe 13 vor der Zerkleinerungsvorrichtung 11 findet dann nicht statt.

Bezüglich der Fein-Teilungsvorrichtung 12 ist es erfindungsgemäß so, dass die Fein-Teilungsvorrichtung 12 die zerkleinerte Rohprobe 13 in eine Restprobe 16 und die Laborprobe 1 teilt. Die Restprobe 16, die insbesondere ein Restprobenstrom sein kann, kann in das Erntegut 6 oder auf das Feld geleitet werden. Die zweite Variante ist in Fig. 1 mittels des Auslasses 17 für die Restprobe 16 angedeutet.

Wie in Fig. 2b) gezeigt, kann es so sein, dass die Fein-Teilungsvorrichtung 12 die Laborprobe 1 in diskreten, insbesondere äquidistanten, Zeitabschnitten aus der Rohprobe 13 entnimmt. Alternativ kann vorgesehen sein, dass die Fein-Teilungsvorrichtung 12 die Laborprobe 1 durchgängig aus der Rohprobe 13 abzweigt. In Fig. 2b) ist die bevorzugte Ausgestaltung dargestellt, dass die Fein-Teilungsvorrichtung 12 jeweils zeitweise einen Teil, insbesondere den gesamten Querschnitt, des zerkleinerten Rohprobenstroms 14 umleitet und so die Laborprobe 1 zusammensetzt.

Im Folgenden werden die bevorzugten Anteile der beiden Teilungen, die zusammen den Anteil der Laborprobe 1 am Los 2 ergeben, näher erläutert.

Hier und vorzugsweise ist ein Gewichtsanteil und/oder Volumenanteil der Rohprobe 13 an dem Los 2 mittels der Grob-Teilungsvorrichtung einstellbar. Dies kann beispielsweise mittels eines Ein- und Ausschaltens oder einer Betriebsgeschwindigkeit der Grob-Teilungsvorrichtung 10 erreicht werden.

Ein Gewichtsanteil und/oder Volumenanteil der Rohprobe 13 an dem Los 2 beträgt vorzugsweise höchstens 1/500, vorzugsweise höchstens 1/1000, weiter vorzugsweise höchstens 1/2000, noch weiter vorzugsweise höchstens 1/5000. In einer besonders bevorzugten Ausführung beträgt der Gewichtsanteil und/oder Volumenanteil etwa 1/10.000. Es ist hier also möglich, mit derselben Grob-Teilungsvorrichtung 10 unterschiedliche Gewichts- und/oder Volumenanteile auf derselben landwirtschaftlichen Erntemaschine 3 zu erzielen. Dabei ist dann vorzugsweise mindestens einer und weiter vorzugsweise sind alle der genannten Werte einstellbar. Weiter gelten die genannten Anteile vorzugsweise für den Anteil des Rohprobenstroms 14 an dem Erntegutstrom 7 entsprechend.

Erfindungsgemäß ist ein Gewichtsanteil und/oder Volumenanteil der Laborprobe 1 an der Rohprobe 13 mittels der Fein-Teilungsvorrichtung 12 einstellbar. Es gelten die zur Grob-Teilungsvorrichtung 10 gemachten Ausführungen entsprechend.

Der Gewichtsanteil und/oder Volumenanteil der Laborprobe 1 an der Rohprobe 13 kann höchstens 1 betragen. Hier und vorzugsweise ist der Gewichtsanteil und/oder Volumenanteil der Laborprobe 1 an der Rohprobe 13 zumindest kleiner als 1 einstellbar, insbesondere immer kleiner als 1. Weiter vorzugsweise beträgt er höchstens 1/10, noch weiter vorzugsweise höchstens 1/100 und/oder mindestens 1/1000, vorzugsweise mindestens 1/750, weiter vorzugsweise mindestens 1/500. Auch hier gilt, dass bei einer Einstellbarkeit des Gewichts- und/oder Volumenanteils vorzugsweise mindestens einer, weiter vorzugsweise alle der genannten Werte einstellbar sind. Genauso gilt, dass die genannten Werte vorzugsweise auch für den Laborprobenstrom 15 gelten.

Der Erntegutstrom 7 liegt hier und vorzugsweise in einer Größenordnung von mehreren Tonnen pro Stunde, vorzugsweise von 20 t bis 300 t pro Stunde oder darüber. Die Losgröße des Los Erntegut 2 beträgt hier und vorzugsweise mindestens eine halbe Tonne, weiter vorzugsweise mindestens 1 t, noch weiter vorzugsweise mindestens 5 t und noch weiter vorzugsweise mindestens 15 t oder mindestens 20 t. Es ergeben sich damit Losdauern von wenigen Minuten bis hin zu etwa einer Stunde. Der Rohprobenstrom 14 liegt dann beispielhaft in einer Größenordnung von einigen Kilogramm pro Stunde. Die Laborprobe 1 beträgt hier und vorzugsweise mindestens 1 g, weiter vorzugsweise mindestens 2,5 g, noch weiter vorzugsweise mindestens 5 g und/oder höchstens 1 kg, vorzugsweise höchstens 750 g, noch weiter vorzugsweise höchstens 100 g. Beispielhaft kann die Laborprobe 1 zumindest im Bereich 5 g bis 500 g einstellbar sein.

Vorzugsweise zerkleinert die Zerkleinerungsvorrichtung 11 Partikel der Rohprobe 13 bezogen auf deren mittlere Größe und/oder deren mittleres Gewicht um einen Faktor von mindestens 10, vorzugsweise mindestens 25, weiter vorzugsweise mindestens 50, noch weiter vorzugsweise etwa 100. Die Teilchen des Ernteguts 6 können je nach Art des Ernteguts 6 beispielhaft zwischen wenigen hundertstel Gramm und einigen Gramm wiegen. Die Partikel der zerkleinerten Rohprobe 13 weisen vorzugsweise ein mittleres Gewicht von höchstens 100 mg, vorzugsweise höchstens 50 mg, weiter vorzugsweise höchstens 20 mg auf. Sofern hier von der Größe eines Partikels die Rede ist, bezieht diese sich immer auf den längsten Durchmesser eines Partikels.

Die Laborprobe 1 weist hier und vorzugsweise zwischen 500 zerkleinerten Partikeln und 1.000.000 zerkleinerten Partikeln auf. Vorzugsweise weist sie mindestens 1000 und/oder höchstens 100.000 zerkleinerte Partikel auf.

Im Folgenden wird nun anhand von Fig. 3 die bevorzugte mechanische Ausführungsform der Zerkleinerungsvorrichtung 11, der Grob-Teilungsvorrichtung 10 und der Fein-Teilungsvorrichtung 12 erläutert.

Die Grob-Teilungsvorrichtung 10 kann eine Öffnung 18 in einer dem Ernteguttransportweg 8 begrenzenden Wand 19 aufweisen. Zusätzlich oder alternativ kann die Grob-Teilungsvorrichtung 10 eine in den Ernteguttransportweg 8 ragende Schneckenschraube 20 aufweisen. Es ist entsprechend ersichtlich, wie damit das Teilungsverhältnis durch eine Drehgeschwindigkeit der Schneckenschraube 20 oder auch ein Ein- und Ausschalten variiert werden kann. Auch kann so die gesamte Probenentnahmevorrichtung 9 abgeschaltet werden. In einer alternativen Ausgestaltung, die hier nicht dargestellt ist, ist die Schneckenschraube quer, insbesondere orthogonal, zum Ernteguttransportweg 8 angeordnet und ragt mit einer Längsseite in den Erntegutstrom 6.

In einer Ausführungsform, die insbesondere für Ballenpressen und/oder bei Stroh als Erntegut 6 interessant ist, jedoch auch bei anderen landwirtschaftlichen Erntemaschinen 3 und Erntegütern 6 verwendet werden kann, kann die Grob-Teilungsvorrichtung 10 eine Vor-Zerkleinerungsvorrichtung aufweisen, die hier nicht dargestellt ist und die einen Teil des Erntegutstroms 7 des Loses 2 gleichzeitig entnimmt und zerkleinert. Diese Vor-Zerkleinerungsvorrichtung kann auch durch die Zerkleinerungsvorrichtung 11 gebildet werden.

Die Öffnung 18 ist hier und vorzugsweise länglich quer zur Fließrichtung des Erntegutstroms 7 ausgerichtet, sodass ein breiter Teil des Erntegutstroms 7 entnommen werden kann. Gegenüber einer entlang des Erntegutstroms 7 ausgerichteten Öffnung 18 kann so eine höhere Repräsentativität erreicht werden.

Die Zerkleinerungsvorrichtung 11 kann eine Mühle, vorzugsweise eine Scheibenmühle, oder ein Schneidwerk, vorzugsweise ein Messerschneidwerk, aufweisen.

Wie ebenfalls in Fig. 3 dargestellt, kann die Fein-Teilungsvorrichtung 12 eine bewegliche Klappe 21 aufweisen, die ansteuerbar einen Teil der Rohprobe 13 umleitet und so als Laborprobe 1 entnimmt. Vorzugsweise ist es dabei so, dass die bewegliche Klappe 21 in den diskreten Zeitabschnitten jeweils einen vollständigen Querschnitt der Rohprobe 13 umleitet. Genauso ist jedoch denkbar, dass mittels der beweglichen Klappe 21 ein Anteil eines durchgängigen Abzweigens der Laborprobe 1 von der Rohprobe 13 einstellbar ist.

Weiterhin im Hinblick auf Fig. 3 kann vorgesehen sein, dass die Probenentnahmevorrichtung 9 eine Sammelvorrichtung 22 für die Laborprobe 1 aufweist. Dafür sind in Fig. 3 zwei Varianten dargestellt. In Fig. 3a) weist die Sammelvorrichtung 22 lediglich ein entleerbares Gefäß auf, an dem eine Analysevorrichtung 23 angeordnet ist. Unabhängig von der Ausgestaltung der Sammelvorrichtung 22 handelt es sich bei dieser Analysevorrichtung 23 hier und vorzugsweise um eine NIR-basierte Analysevorrichtung 23, insbesondere ein NIR-Spektroskop. Damit kann eine Analyse der Laborprobe 1 direkt auf der landwirtschaftlichen Erntemaschine 3 durchgeführt werden.

Wie in Fig. 3b) dargestellt, kann auch vorgesehen sein, dass die Sammelvorrichtung 22 ein, insbesondere verschließbares, Behältnis 24 aufweist, in dem die Sammelvorrichtung 22 die Laborprobe 1 sammelt. Weiter bevorzugt ist dann, dass das Behältnis 24 von der landwirtschaftlichen Erntemaschine 3 an einen Benutzer B ausgegeben wird. Alternativ ist jedoch auch möglich, dass der Benutzer B das Behältnis 24 ausleert und dieses nicht entnimmt.

Darauf aufbauend ist es hier und vorzugsweise so, dass die Laborprobe 1 von einer Analysevorrichtung außerhalb der landwirtschaftlichen Erntemaschine 3, vorzugsweise in einem Labor, analysiert wird. Es kann dabei vorgesehen sein, dass dem Benutzer B eine Laborprobe 1 ausgegeben wird, es können jedoch auch mehrere Laborproben 1 in Behältnissen 24 gesammelt und dem Benutzer B ausgegeben werden.

Die Analyse im Labor oder soweit durchführbar auf der landwirtschaftlichen Erntemaschine 3 kann eine Spektroskopie, eine NMR-Analyse, ein nass-chemisches Verfahren oder dergleichen umfassen. Hier und vorzugsweise wird die Feuchte der Laborprobe 1 und/oder Inhaltsstoffe der Laborprobe 1, vorzugsweise ein Proteingehalt und/oder ein Zuckergehalt und/oder abgeleitete Größen, vorzugsweise eine Verdaulichkeit für Nutztiere, analysiert und ermittelt.

Nach einer weiteren Lehre, der eigenständige Bedeutung zukommt, wird eine landwirtschaftliche Erntemaschine 3, insbesondere eingerichtet zur Verwendung in dem vorschlagsgemäßen Verfahren, mit mindestens einem Arbeitsaggregat 4 zum Aufnehmen eines abgeernteten Feldbestandes 5 als Erntegut 6 und/oder zur Verarbeitung des Ernteguts 6, wobei das Erntegut 6 im Betrieb der landwirtschaftlichen Erntemaschine 3 in einem Erntegutstrom 7 entlang eines Ernteguttransportweges 8 durch die landwirtschaftliche Erntemaschine 3 transportiert wird, vorgeschlagen.

Wesentlich bei der landwirtschaftlichen Erntemaschine 3 ist, dass die landwirtschaftliche Erntemaschine 3 eine automatische Probenentnahmevorrichtung 9 aufweist, dass die Probenentnahmevorrichtung 9 eine Ernteguttransportweg 8 angeordnete Grob-Teilungsvorrichtung 10, eine Zerkleinerungsvorrichtung 11 und eine Fein-Teilungsvorrichtung 12 aufweist, dass die Grob-Teilungsvorrichtung 10 aus dem Erntegutstrom 7 eine Rohprobe 13 entnehmen kann, dass die Zerkleinerungsvorrichtung 11 die Rohprobe 13 zerkleinern kann und dass die Fein-Teilungsvorrichtung 12 aus der zerkleinerten Rohprobe 13 die Laborprobe 1 zur zeitlich entkoppelten Analyse entnehmen kann.

### Bezugszeichenliste

- 1: Laborprobe
- 2: Los Erntegut
- 3: Landwirtschaftliche Erntemaschine
- 4: Arbeitsaggregat
- 5: Feldbestand
- 6: Erntegut
- 7: Erntegutstrom
- 8: Ernteguttransportweg
- 9: Probenentnahmevorrichtung
- 10: Grob-Teilungsvorrichtung
- 11: Zerkleinerungsvorrichtung
- 12: Fein-Teilungsvorrichtung
- 13: Rohprobe
- 14: Rohprobenstrom
- 15: Laborprobenstrom
- 16: Restprobe
- 17: Auslass
- 18: Öffnung
- 19: Wand
- 20: Schneckenschraube
- 21: Bewegliche Klappe
- 22: Sammelvorrichtung
- 23: Analysevorrichtung
- 24: Behältnis
- B: Benutzer

## Patentansprüche

1. Verfahren zum Sammeln einer Laborprobe (1) aus einem Los Erntegut (2) mittels einer landwirtschaftlichen Erntemaschine (3) mit mindestens einem Arbeitsaggregat (4) zum Aufnehmen eines abgeernteten Feldbestandes (5) als Erntegut (6) und/oder zur Verarbeitung des Ernteguts (6), wobei das Erntegut (6) im Betrieb der landwirtschaftlichen Erntemaschine (3) in einem Erntegutstrom (7) entlang eines Ernteguttransportweges (8) durch die landwirtschaftliche Erntemaschine (3) transportiert wird, wobei die landwirtschaftliche Erntemaschine (3) eine automatische Probenentnahmevorrichtung (9) aufweist, dass die Probenentnahmevorrichtung (9) eine am Ernteguttransportweg (8) angeordnete Grob-Teilungsvorrichtung (10), eine Zerkleinerungsvorrichtung (11) und eine Fein-Teilungsvorrichtung (12) aufweist, dass die Grob-Teilungsvorrichtung (10) aus dem Erntegutstrom (7) des Loses (2) eine Rohprobe (13) entnimmt, dass die Zerkleinerungsvorrichtung (11) die Rohprobe (13) zerkleinert und dass die Fein-Teilungsvorrichtung (12) aus der zerkleinerten Rohprobe (13) die Laborprobe (1) zur zeitlich entkoppelten Analyse entnimmt, dadruch gekennzeichnet, dass ein Gewichtsanteil und/oder Volumenanteil der Laborprobe (1) an der Rohprobe (13) mittels der Fein-Teilungsvorrichtung (12) einstellbar ist.

2. Verfahren nach Anspruch 1, **dadurch gekennzeichnet, dass** die Grob-Teilungsvorrichtung (10) aus dem Erntegutstrom (7) einen Rohprobenstrom (14) entnimmt, dass die Zerkleinerungsvorrichtung (11) den Rohprobenstrom (14) zerkleinert, vorzugsweise, dass die Fein-Teilungsvorrichtung (12) aus dem zerkleinerten Rohprobenstrom (14) einen Laborprobenstrom (15) entnimmt, weiter vorzugsweise dass die Laborprobe (1) ein Abschnitt des Laborprobenstroms (15) ist.

3. Verfahren nach Anspruch 1 oder 2, **dadurch gekennzeichnet, dass** die Grob-Teilungsvorrichtung (10) die Rohprobe (13) kontinuierlich aus dem Erntegutstrom (7) entnimmt und die Fein-Teilungsvorrichtung (12) die Laborprobe (1) kontinuierlich aus der zerkleinerten Rohprobe (13) entnimmt, sodass die Laborprobe (1) ein zusammenhängendes Los (2), insbesondere vollständig, abbildet, vorzugsweise, dass eine zeitliche Verzögerung zwischen Aufnahme des Ernteguts (6) und Entnahme der Laborprobe (1) im Wesentlichen konstant ist.

4. Verfahren nach einem der vorhergehenden Ansprüche, **dadurch gekennzeichnet, dass** die Grob-Teilungsvorrichtung (10) die Rohprobe (13) in diskreten, insbesondere äquidistanten, Abschnitten aus dem Erntegutstrom (7) entnimmt, oder, dass die Grob-Teilungsvorrichtung (10) die Rohprobe (13) durchgängig aus dem Erntegutstrom (7) abzweigt, vorzugsweise, dass die Zerkleinerungsvorrichtung (11) die Rohprobe (13) vollständig zerkleinert

5. Verfahren nach einem der vorhergehenden Ansprüche, **dadurch gekennzeichnet, dass** die Fein-Teilungsvorrichtung (12) die zerkleinerte Rohprobe (13) in eine Restprobe (16) und die Laborprobe (1) teilt, vorzugsweise, dass die Fein-Teilungsvorrichtung (12) die Laborprobe (1) in diskreten, insbesondere äquidistanten, Zeitabschnitten aus der Rohprobe (13) entnimmt, oder, dass die Fein-Teilungsvorrichtung (12) die Laborprobe (1) durchgängig aus der Rohprobe (13) abzweigt.

6. Verfahren nach einem der vorhergehenden Ansprüche, **dadurch gekennzeichnet, dass** ein Gewichtsanteil und/oder Volumenanteil der Rohprobe an dem Los (2) mittels der Grob-Teilungsvorrichtung (10) einstellbar ist, und/oder, dass ein Gewichtsanteil und/oder Volumenanteil der Rohprobe an dem Los (2) höchstens 1/500, vorzugsweise höchstens 1/1.000, weiter vorzugsweise höchstens 1/2.000, noch weiter vorzugsweise höchstens 1/5.000 und vorzugsweise etwa 1/10.000 beträgt.

7. Verfahren nach einem der vorhergehenden Ansprüche, **dadurch gekennzeichnet, dass** der Gewichtsanteil und/oder Volumenanteil der Laborprobe (1) an der Rohprobe (13) höchstens 1 beträgt, vorzugsweise kleiner 1 ist, weiter vorzugsweise höchstens 1/10, noch weiter vorzugsweise höchstens 1/100 und/oder mindestens 1/1.000, vorzugsweise mindestens 1/750, weiter vorzugsweise mindestens 1/500 beträgt.

8. Verfahren nach einem der vorhergehenden Ansprüche, **dadurch gekennzeichnet, dass** die Zerkleinerungsvorrichtung (11) Partikel der Rohprobe (13) bezogen auf deren mittlere Größe und/oder deren mittleres Gewicht um einen Faktor von mindestens 10, vorzugsweise mindestens 25, weiter vorzugsweise mindestens 50, noch weiter vorzugsweise etwa 100 zerkleinert, vorzugsweise, dass die Partikel der zerkleinerten Rohprobe (13) ein mittleres Gewicht von höchstens 100 mg, vorzugsweise höchstens 50 mg, weiter vorzugsweise höchstens 20mg aufweisen.

9. Verfahren nach einem der vorhergehenden Ansprüche, **dadurch gekennzeichnet, dass** die Grob-Teilungsvorrichtung (10) eine Öffnung (18) in einer den Ernteguttransportweg (8) begrenzenden Wand (19) aufweist, und/oder, dass die Grob-Teilungsvorrichtung (10) eine in den Ernteguttransportweg (8) ragende Schneckenschraube (20) aufweist, und/oder, dass die Grob-Teilungsvorrichtung (10) eine Vor-Zerkleinerungsvorrichtung aufweist, die einen Teil des Erntegutstroms (7) des Loses (2) gleichzeitig entnimmt und zerkleinert.

10. Verfahren nach einem der vorhergehenden Ansprüche, **dadurch gekennzeichnet, dass** die Zerkleinerungsvorrichtung (11) eine Mühle, vorzugsweise eine Scheibenmühle, oder ein Schneidwerk, vorzugsweise ein Messerschneidwerk, aufweist.

11. Verfahren nach einem der vorhergehenden Ansprüche, **dadurch gekennzeichnet, dass** die Fein-Teilungsvorrichtung (12) eine bewegliche Klappe (21) aufweist, die ansteuerbar einen Teil der Rohprobe (13) umleitet und so als Laborprobe (1) entnimmt, vorzugsweise, dass die bewegliche Klappe (21) in den diskreten Zeitabschnitten jeweils einen vollständigen Querschnitt der Rohprobe (13) umleitet.

12. Verfahren nach einem der vorhergehenden Ansprüche, **dadurch gekennzeichnet, dass** die Probenentnahmevorrichtung (9) eine Sammelvorrichtung (22) für die Laborprobe (1) aufweist, vorzugsweise, dass die Sammelvorrichtung (22) ein, insbesondere verschließbares, Behältnis (24) aufweist, in dem die Sammelvorrichtung (22) die Laborprobe (1) sammelt, weiter vorzugsweise, dass das Behältnis (24) von der landwirtschaftlichen Erntemaschine (3) an einen Benutzer (B) ausgegeben wird.

13. Verfahren nach einem der vorhergehenden Ansprüche, **dadurch gekennzeichnet, dass** die Laborprobe (1) von einer Analysevorrichtung außerhalb der landwirtschaftlichen Erntemaschine (3), vorzugsweise in einem Labor, analysiert wird.

14. Landwirtschaftlichen Erntemaschine zur Durchführung des Verfahrens nach einem der Ansprüche 1 bis 13 wobei die landwirtschaftliche Erntemaschine (3) eine automatische Probenentnahmevorrichtung (9) aufweist, dass die Probenentnahmevorrichtung (9) eine am Ernteguttransportweg (8) angeordnete Grob-Teilungsvorrichtung (10), eine Zerkleinerungsvorrichtung (11) und eine Fein-Teilungsvorrichtung (12) aufweist, wobei die Grob-Teilungsvorrichtung (10) dazu eingerichtet ist, aus dem Erntegutstrom (7) des Loses (2) eine Rohprobe (13) zu entnehmen, wobei die Zerkleinerungsvorrichtung (11) dazu eingerichtet ist, die Rohprobe (13) zu zerkleinern und wobei die Fein-Teilungsvorrichtung (12) dazu eingerichtet ist, aus der zerkleinerten Rohprobe (13) die Laborprobe (1) zur zeitlich entkoppelten Analyse zu entnehmen, wobei die landwirtschaftliche Erntemaschine (3) **dadurch gekennzeichnet ist, dass** die Fein-Teilungsvorrichtung (12) dazu eingerichtet ist, einen Gewichtsanteil und/oder Volumenanteil der Laborprobe (1) an der Rohprobe (13) einzustellen.

## Claims

1. A method for collecting a laboratory sample (1) from a batch of harvested material (2) by means of an agricultural harvesting machine (3) with at least one working assembly (4) for picking up a field crop (5) which has been cut down as harvested material (6) and/or for processing the harvested material (6), wherein, during the operation of the agricultural harvesting machine (3), the harvested material (6) is transported through the agricultural harvesting machine (3) in a harvested material flow (7) along a harvested material transport path (8),
wherein the agricultural harvesting machine (3) has an automatic sample extraction device (9), the sample extraction device (9) has a coarse dividing device (10) disposed on the harvested material transport path (8), a comminuting device (11) and a fine dividing device (12),
the coarse dividing device (10) extracts a raw sample (13) from the harvested material flow of the batch (2), the comminuting device (11) comminutes the raw sample (13) and the fine dividing device (12) extracts the laboratory sample (1) from the comminuted raw sample (13) for temporally decoupled analysis,
**characterized in that**
a fraction by weight and/or fraction by volume of the laboratory sample (1) with respect to the raw sample (13) can be adjusted by means of the fine dividing device (12).

2. The method according to claim 1, **characterized in that** the coarse dividing device (10) extracts a raw sample flow (14) from the harvested material flow (7), **in that** the comminuting device (11) comminutes the raw sample flow (14), preferably **in that** the fine dividing device (12) extracts a laboratory sample flow (15) from the comminuted raw sample flow (14), more preferably **in that** the laboratory sample (1) is a section of the laboratory sample flow (15).

3. The method according to claim 1 or claim 2, **characterized in that** the coarse dividing device (10) continuously extracts the raw sample (13) from the harvested material flow (7) and the fine dividing device (12) continuously extracts the laboratory sample (1) from the comminuted raw sample (13), so that the laboratory sample (1) represents a coherent batch (2), in particular completely, preferably **in that** a time lag between picking up the harvested material (6) and extracting the laboratory sample (1) is substantially constant.

4. The method according to one of the preceding claims, **characterized in that** the coarse dividing device (10) extracts the raw sample (13) from the harvested material flow (7) in discrete, in particular equidistant sections, or **in that** the coarse dividing device (10) continuously diverts the raw sample (13) from the harvested material flow (7), preferably **in that** the comminuting device (11) comminutes the entire raw sample (13).

5. The method according to one of the preceding claims, **characterized in that** the fine dividing device (12) divides the comminuted raw sample (13) into a residual sample (16) and the laboratory sample (1), preferably **in that** the fine dividing device (12) extracts the laboratory sample (1) from the raw sample (13) at discrete, in particular equidistant intervals of time, or **in that** the fine dividing device (12) continuously diverts the laboratory sample (1) from the raw sample (13).

6. The method according to one of the preceding claims, **characterized in that** a fraction by weight and/or fraction by volume of the raw sample with respect to the batch (2) can be adjusted by means of the coarse dividing device (10), and/or **in that** a fraction by weight and/or fraction by volume of the raw sample with respect to the batch (2) is at most 1/500, preferably at most 1/1000, more preferably at most 1/2000, yet more preferably at most 1/5000 and preferably approximately 1/10000.

7. The method according to one of the preceding claims, **characterized in that** the fraction by weight and/or fraction by volume of the laboratory sample (1) with respect to the raw sample (13) is at most 1, preferably is less than 1, more preferably is at most 1/10, yet more preferably at most 1/100 and/or at least 1/1000, preferably at least 1/750, more preferably at least 1/500.

8. The method according to one of the preceding claims, **characterized in that** the comminuting device (11) comminutes particles of the raw sample (13), with respect to their mean size and/or their mean weight, by a factor of at least 10, preferably at least 25, more preferably at least 50, yet more preferably approximately 100, preferably **in that** the particles of the comminuted raw sample (13) have a mean weight of at most 100 mg, preferably at most 50 mg, more preferably at most 20 mg.

9. The method according to one of the preceding claims, **characterized in that** the coarse dividing device (10) has an opening (18) in a wall (19) delimiting the harvested material transport path (8), and/or **in that** the coarse dividing device (10) has a worm screw (20) protruding into the harvested material transport path (8), and/or in that the coarse dividing device (10) has a pre-comminuting device which simultaneously extracts and comminutes a portion of the harvested material flow (7) of the batch (2).

10. The method according to one of the preceding claims, **characterized in that** the comminuting device (11) is a mill, preferably a disk mill, or a cutting assembly, preferably a knife cutting assembly.

11. The method according to one of the preceding claims, **characterized in that** the fine dividing device (12) has a movable flap (21) which diverts a portion of the raw sample (13) in a controllable manner and therefore extracts it as the laboratory sample (1), preferably **in that** in the discrete time intervals, the movable flap (21) respectively diverts a complete cross section of the raw sample (13).

12. The method according to one of the preceding claims, **characterized in that** the sample extraction device (9) has a collecting device (22) for the laboratory sample (1), preferably **in that** the collecting device (22) has a container (24), which in particular can be closed, in which the collecting device (22) collects the laboratory sample (1), more preferably **in that** the container (24) is dispensed from the agricultural harvesting machine (3) to a user (B).

13. The method according to one of the preceding claims, **characterized in that** the laboratory sample (1) is analysed by an analytical device externally of the agricultural harvesting machine (3), preferably in a laboratory.

14. An agricultural harvesting machine for carrying out the method according to one of claims 1 to 13, wherein
the agricultural harvesting machine (3) has an automatic sample extraction device (9), the sample extraction device (9) has a coarse dividing device (10) disposed on the harvested material transport path (8), a comminuting device (11) and a fine dividing device (12), wherein the coarse dividing device (10) is configured to extract a raw sample (13) from the harvested material flow (7) of the batch (2), wherein the comminuting device (11) is configured to comminute the raw sample (13) and wherein the fine dividing device (12) is configured to remove the laboratory sample (1) from the comminuted raw sample (13) for temporally uncoupled analysis,
wherein the agricultural harvesting machine (3) is **characterized in that** the fine dividing device (12) is configured to adjust a fraction by weight and/or fraction by volume of the laboratory sample (1) with respect to the raw sample (13).

## Revendications

1. Procédé de prélèvement d'un échantillon de laboratoire (1) dans un lot de récolte (2), à l'aide d'une machine de récolte agricole (3) comprenant au moins un organe de travail (4) destiné à ramasser, en tant que récolte (6), les végétaux d'un champ (5) récoltés, et/ou à traiter la récolte (6), sachant que lors du fonctionnement de la machine de récolte agricole (3), la récolte (6) est transportée à travers la machine de récolte agricole (3), dans un flux de récolte (7), le long d'un trajet de transport de récolte (8), sachant que la machine de récolte agricole (3) présente un dispositif de prélèvement de récolte (9) automatique, que le dispositif de prélèvement de récolte (9) comporte un dispositif de division grossière (10) placé sur le trajet de transport de récolte (8), un dispositif de broyage (11) et un dispositif de division fine (12), que le dispositif de division grossière (10) prélève un échantillon brut (13) dans le flux de récolte (7) du lot (2), que le dispositif de broyage (11) broie l'échantillon brut (13) et que le dispositif de division fine (12) prélève l'échantillon de laboratoire (1) dans l'échantillon brut (13) broyé, en vue de l'analysé découplée dans le temps,
**caractérisé en ce que**
une proportion en poids et/ou une proportion en volume de l'échantillon de laboratoire (1) peut être réglée sur l'échantillon brut (13) à l'aide du dispositif de division fine (12).

2. Procédé selon la revendication 1, **caractérisé en ce que** le dispositif de division grossière (10) prélève un flux d'échantillon brut (14) dans le flux de récolte (7), **en ce que** le dispositif de broyage (11) broie le flux d'échantillon brut (14), de préférence **en ce que** le dispositif de division fine (12) prélève un flux d'échantillon de laboratoire (15) dans le flux d'échantillon brut (14) broyé et, de manière particulièrement avantageuse, **en ce que** l'échantillon de laboratoire (1) est une partie du flux d'échantillon de laboratoire (15).

3. Procédé selon la revendication 1 ou 2, **caractérisé en ce que** le dispositif de division grossière (10) prélève l'échantillon brut (13) de manière continue dans le flux de récolte (7), et le dispositif de division fine (12) prélève l'échantillon de laboratoire (1) de manière continue dans l'échantillon brut (13) broyé, de sorte que l'échantillon de laboratoire (1) reproduit un lot (2) cohérent, notamment de façon complète, de préférence qu'un décalage dans le temps entre le ramassage de la récolte (6) et le prélèvement de l'échantillon de laboratoire (1) est sensiblement constant.

4. Procédé selon une des revendications précédentes, **caractérisé en ce que** le dispositif de division grossière (10) prélève l'échantillon brut (13) dans le flux de récolte (7), dans des portions discrètes, notamment équidistantes, ou **en ce que** le dispositif de division grossière (10) dérive l'échantillon brut (13) de façon continue du flux de récolte (7), de préférence **en ce que** le dispositif de broyage (11) broie complètement l'échantillon brut (13).

5. Procédé selon une des revendications précédentes, **caractérisé en ce que** le dispositif de division fine (12) divise l'échantillon brut (13) broyé en un échantillon résiduel (16) et en échantillon de laboratoire (1), de préférence **en ce que** le dispositif de division fine (12) prélève l'échantillon de laboratoire (1) dans l'échantillon brut (13) à intervalles de temps discrets, notamment équidistants, ou **en ce que** le dispositif de division fine (12) dérive l'échantillon de laboratoire (1) de manière continue de l'échantillon brut (13).

6. Procédé selon une des revendications précédentes, **caractérisé en ce qu'**une proportion en poids et/ou une proportion en volume de l'échantillon brut dans le lot (2) peut être réglée à l'aide du dispositif de division grossière (10), et/ou **en ce qu'**une proportion en poids et/ou une proportion en volume de l'échantillon brut dans le lot (2) est au maximum de 1/500, de préférence au maximum de 1/1 000, notamment de préférence au maximum de 1/2 000, voire de préférence au maximum de 1/5 000 et est de préférence d'environ 1/10 000.

7. Procédé selon une des revendications précédentes, **caractérisé en ce que** la proportion en poids et/ou la proportion en volume de l'échantillon de laboratoire (1) dans l'échantillon brut (13) est au maximum de 1, de préférence inférieure à 1, notamment de préférence au maximum de 1/10, voire de préférence au maximum de 1/100 et/ou est au moins de 1/1 000, de préférence au moins de 1/750, et notamment de préférence au moins de 1/500.

8. Procédé selon une des revendications précédentes, **caractérisé en ce que** le dispositif de broyage (11) broie des particules de l'échantillon brut (13), rapporté à leur taille médiane et/ou leur poids médian, d'un facteur d'au moins 10, de préférence d'au moins 25, voire de préférence d'au moins 50, voire notamment de préférence d'environ 100, de préférence **en ce que** les particules de l'échantillon brut (13) broyé présentent un poids moyen d'au maximum 100 mg, de préférence d'au maximum 50 mg, et notamment de préférence d'au maximum 20 mg.

9. Procédé selon une des revendications précédentes, **caractérisé en ce que** le dispositif de division grossière (10) présente une ouverture (18) dans une paroi (19) délimitant le trajet de transport de récolte (8), et/ou **en ce que** le dispositif de division grossière (10) présente une vis sans fin (20) avançant dans le trajet de transport de récolte (8), et/ou **en ce que** le dispositif de division grossière (10) présente un dispositif de pré-broyage qui prélève et broie en même temps une partie du flux de récolte (7) du lot (2).

10. Procédé selon une des revendications précédentes, **caractérisé en ce que** le dispositif de broyage (11) présente un broyeur, de préférence un broyeur à disques, ou un mécanisme de coupe, de préférence un mécanisme de coupe à lames.

11. Procédé selon une des revendications précédentes, **caractérisé en ce que** le dispositif de division fine (12) présente un volet (21) mobile qui peut être activé pour dévier une partie de l'échantillon brut (13) et la prélève ainsi en tant qu'échantillon de laboratoire (1), de préférence **en ce que** le volet (21) mobile dévie respectivement une section transversale complète de l'échantillon brut (13), dans les intervalles de temps discrets.

12. Procédé selon une des revendications précédentes, **caractérisé en ce que** le dispositif de prélèvement d'échantillon (9) présente un dispositif de collecte (22) pour l'échantillon de laboratoire (1), de préférence **en ce que** le dispositif de collecte (22) présente un récipient (24), pouvant notamment être fermé, dans lequel le dispositif de collecte (22) recueille l'échantillon de laboratoire (1), notamment de préférence **en ce que** le récipient (24) est délivré à un utilisateur (B) par la machine de récolte agricole (3).

13. Procédé selon une des revendications précédentes, **caractérisé en ce que** l'échantillon de laboratoire (1) est analysé par un dispositif d'analyse, à l'extérieur de la machine de récolte agricole (3), de préférence dans un laboratoire.

14. Machine de récolte agricole destinée à la mise en oeuvre du procédé selon une des revendications 1 à 13, sachant que la machine de récolte agricole (3) comprend un dispositif de prélèvement d'échantillon (9) automatique, que le dispositif de prélèvement d'échantillon (9) comporte un dispositif de division grossière (10) placé sur le trajet de transport de récolte (8), un dispositif de broyage (11) et un dispositif de division fine (12), le dispositif de division grossière (10) étant conçu pour prélever un échantillon brut (13) dans le flux de récolte (7) du lot (2), le dispositif de broyage (11) étant conçu pour broyer l'échantillon brut (13), et le dispositif de division fine (12) étant conçu pour prélever l'échantillon de laboratoire (1) dans l'échantillon brut (13) broyé, en vue de l'analysé découplée dans le temps, la machine de récolte agricole (3) étant **caractérisée en ce que** le dispositif de division fine (12) est conçu pour régler une proportion en poids et/ou une proportion en volume de l'échantillon de laboratoire (1) sur l'échantillon brut (13).
